# EUROPÄISCHE PATENTANMELDUNG

(11) **EP 1 713 245 A1**
(43) Veröffentlichungstag der Anmeldung: **18.10.2006**
(21) Anmeldenummer: 05007983.9
(22) Anmeldetag: 12.04.2005
(51) Int. Cl.: H04M 15/00, H04M 15/20, H04M 15/10, H04M 15/26, H04M 15/38, H04L 12/14, H04L 29/06

(54) **Verfahren zur Gebührenanzeige einer SIP Verbindungen an mehreren Endgeräten**

(71) Anmelder: SIEMENS AKTIENGESELLSCHAFT, 80333 München (DE)
(72) Erfinder: Zygan, Renate, Dr., 81477 München (DE)

(57) **Zusammenfassung**

In einem SIP-basierten Sprachnetz soll es möglich sein, dass ein SIP-Applikationsserver während einer SIP-Verbindung die anfallenden Gebühren in Realzeit berechnet und sowohl dem A-seitigen SIP-Teilnehmerendgerät wie auch mindestens einem weiteren SIP-Teilnehmerendgerät zusendet.
Die Erfindung löst diese Aufgabe, indem sie für die Zustellung der ermittelten Verbindungsgebühren einen verbindungsunabhängigen SIP-Signalisierungskanal verwendet.

## Beschreibung

### Aufgabe, die der Erfindung zugrunde liegt

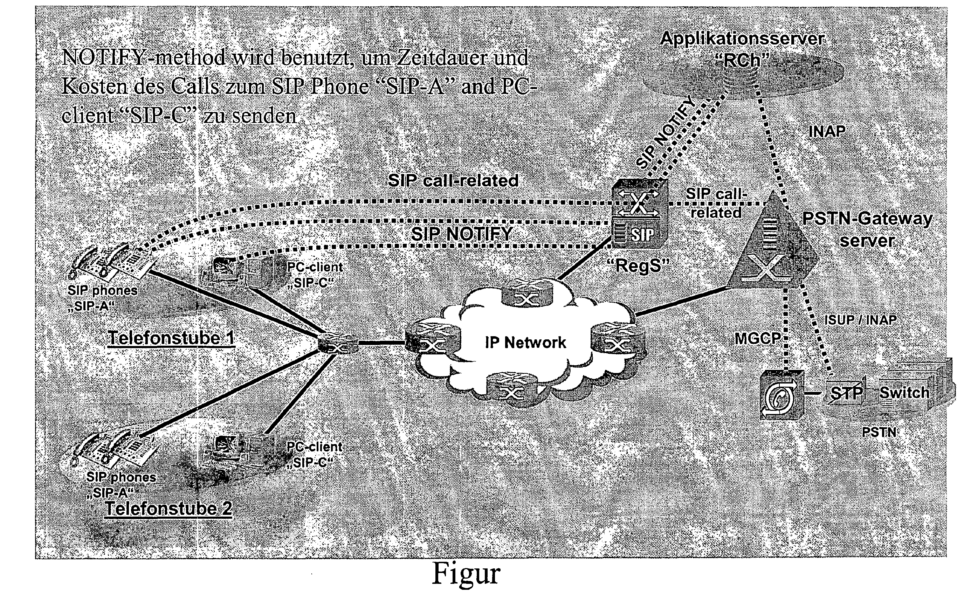

### (siehe dazu auch die Figur der Zeichnung)

Ein SIP-basiertes Sprachnetz besteht nach dem heutigen Stand der Technik im wesentlichen aus einem SIP-Registrar-Server "RegS", an dem sich die SIP-Teilnehmerendgeräte mit ihren aktuellen IP-Adressen registrieren und der für die IP-Adressvermittlung zwischen zwei SIP-Teilnehmern A und B sorgt, und weiteren Applikationsservern, die vom SIP-Registrar-Server "RegS" in die SIP-Signalisierung einbezogen werden, wenn zusätzliche Anwendungsfunktionen benötigt werden. In vielen Fällen sind auch Server für den Übergang in TDM-Telefonnetze Bestandteil eines SIP-basierten Sprachnetzes.
In einem solchen SIP-basierten Sprachnetz soll es möglich sein, dass ein SIP-Applikationsserver "RCh" während einer SIP-Verbindung die anfallenden Gebühren in Realzeit berechnet und sowohl dem A-seitigen SIP-Teilnehmer "SIP-A" wie auch mindestens einem weiteren SIP-Teilnehmerendgerät "SIP-C" zusendet. Ein Anwendungsbeispiel dafür sind privat betriebene Telefonstuben, in denen die laufenden Gebühren sowohl dem telefonierenden Endkunden "SIP-A" wie auch dem Betreiber der Telefonstube "SIP-C" in Realzeit angezeigt werden sollen.

### Bisherige Lösung der genannten Aufgabe

### (siehe dazu auch die Figur der Zeichnung)

Für die Unterstützung von Gebührenanzeige während einer SIP-Verbindung werden derzeit Prozeduren diskutiert und standardisiert, die verbindungsbezogene SIP-Signalisierung verwenden, in Analogie zu der Signalisierung der Gebührenanzeige während einer TDM-Verbindung.

### Lösung der Aufgabenstellung gemäß der Erfindung

Das neue Verfahren zur Mehrpunkt - Gebührenanzeige für SIP-Verbindungen ist in der Figur für einen beispielhaften Anwendungsfall dargestellt. Der Applikationsserver "RCh" erhält in dieser Beispielnetzkonfiguration die Verbindungsdaten über eine INAP-Schnittstelle vom PSTN-Gateway - Server. Alternativ wäre es möglich, dass er die Verbindungsdaten direkt vom SIP-Call Server, der in vielen Fällen gleichzeitig der SIP-Registrar ist, über eine zweite, verbindungsbezogene SIP-Schnittstelle erhält.

Gemäß dem neuen Verfahren wird anstelle einer verbindungsbezogenen SIP-Signalisierung ein verbindungsunabhängiger SIP-Signalisierungskanal für die Übermittlung der Gesprächsgebühren von dem Applikationsserver "RCh" an die SIP-Endpunkte "SIP-A" und "SIP-C" verwendet.

Die Gebühreninformation wird vom Applikationsserver "RCh" gemäß einer Ausführungsform der Erfindung in eine von der IETF standardisierte SIP-Nachricht (z.B. NOTIFY gemäß RFC 3265) für die Signalisierung von Ereignissen gepackt. Dazu wird ein für Realzeitvergebührungsanzeige spezifischer Event-type definiert sowie eine zugehörige Datenstruktur (Event-package) für die übermittelten Gebühreninformationen. Der Applikationsserver "RCh" sendet NOTIFY - Nachrichten an "SIP-A" und "SIP-C". Den Inhalt der NOTIFY -Nachricht an "SIP-A" und den Inhalt der NOTIFY - Nachricht an "SIP-C" bestimmt der Applikationsserver "RCh". Damit eine geeignete Anzeige der Daten an den Endgeräten "SIP-A" und "SIP-C" erfolgt, ist eine Absprache des Inhaltes und der zugehörigen Datenstruktur mit dem Hersteller der SIP-Teilnehmerendgeräte erforderlich.

Der Applikationsserver "RCh" erhält aus dem SIP-basierten Sprachnetz über eine beliebige Call Control - Schnittstelle (e.g. SIP von einem SIP-call control server oder e.g. INAP vom PSTN-Gateway) Information über
- "SIP-A"- Teilnehmeridentifikator (e.g. E.164 @ RegS)
- Beginnzeit und Datum der SIP-Verbindung
- Endezeit und Datum der SIP-Verbindung
- Ziel B der SIP- Verbindung (z.B. E.164 - Nummer im PSTN) .

Der Applikationsserver "RCh" ermittelt die Verbindungsgebühren sowie den zur Teilnehmeridentifikation "SIP-A" gehörigen weiteren Teilnehmer "SIP-C" auf der Basis von administrierten Daten und generiert die genannte standardisierte SIP-Nachricht (NOTIFY gemäß RFC 3265) an "SIP-A" und "SIP-C".

Für die Zustellung der SIP-Nachrichten NOTIFY an "SIP-A" und "SIP-C" wird gemäß einer Ausführungsform der Erfindung die Teilnehmerregistrierungsfunktion des SIP-Registrar-Servers "RegS" benutzt. Dazu sendet der Applikationsserver die von ihm generierten SIP-Nachrichten NOTIFY an den SIP-Registrar-Server "RegS" und dieser sendet sie basierend auf den bei ihm registrierten IP-Adressen weiter an die SIP-Endpunkte "SIP-A" und "SIP-C". Der Erhalt von NOTIFY - Nachrichten wird gemäß RFC 3265 quittiert. Eine separate Registrierungsprozedur für die NOTIFY - Nachrichten des Applikationsservers "RCh" wird nicht verwendet (keine "SUBSCRIBE" Prozedur. Diese ist gemäß RFC 3265 optional.)

Die für die Signalisierungsbeziehung zwischen "SIP-A" und "RegS" eingeführten Prozeduren zur Authentisierung des SIP-Senders (SIP-message authentication) und zur Sicherung der übertragenen Daten (SIP-message integrity), insbesondere die dafür verwendeten Passwörter oder Zertifikate, werden gemäß einer Ausführungsform der Erfindung für die Sicherung der NOTIFY-Nachrichten für Gebührenanzeige wieder verwendet werden.

In den Teilnehmerendgeräten "SIP-A" und "SIP-C" werden die empfangenen Gebühreninformationen zur Anzeige gebracht.

### Vorteile der erfindungsgemäßen Lösung

- Das angegebene Verfahren ist eine Ende-zu-Ende - Prozedur mit minimalen Anforderungen an das SIP-Netz. Vom SIP-Netz werden nur generische Funktionen (Übermittlung der SIP-Verbindungsdaten und gemäß einer Ausführungsform der Erfindung Relay von SIP-NOTIFY-Meldungen) benötigt, wie sie auch für andere Applikationen bereits zur Verfügung gestellt werden. Die applikationsspezifischen Erweiterungen für die Gebührenanzeige fallen lediglich im Applikationsserver "RCh" und in den SIP-Teilnehmerendgeräten an. Daher kann das Verfahren mit minimalen Kosten in bestehende SIP-Netze eingeführt werden.
- Als Ende-zu-Ende - Verfahren ist es besonders flexibel. Bei eventuell notwendigen Änderungen und Erweiterungen sind nur der Applikationsserver "RCh" und eventuell die beteiligten SIP-Teilnehmerendgeräte betroffen.
- Bei Verwendung von SIP-Verbindungsbezogener Signalisierung tritt das Problem auf, wie die Gebühreninformation an den Endpunkt "SIP-C" übermittelt werden sollte, der ja i.d.R. nicht Teilnehmer in der SIP-Verbindung von "SIP-A" zum Ziel B ist. Durch die Verwendung von nicht-SIP-Verbindungsbezogener Signalisierung sowohl zu "SIP-A" wie zu "SIP-C" wird dieses Problem vermieden.
- Im Gegensatz zur Verwendung von standardisierten SIP-Messaging Systemen (z.B. eines Presence-basierten Instant Messaging Systems) für die Übermittlung von SIP-Verbindungs-Gebührendaten wird keine separate Registrierung der Endgeräte für diese Anwendung benötigt. Stattdessen wird gemäß einer Ausführungsform der Erfindung die Registrierung der Endgeräte für die vergebührten SIP-Verbindungen wiederverwendet.
   o Dies erhöht die Zuverlässigkeit der Gesamtlösung.
   o Dies ermöglicht die Wiederverwendung von Prozeduren zur Authentisierung und Schutz der Datenintegrität für SIP-Verbindungsaufbaumeldungen und für SIP-NOTIFY - Meldungen für die Gebührenanzeige.

## Patentansprüche

1. Verfahren zur Gebührenanzeige bei SIP-Verbindungen, demgemäß
a) für die Gebührenberechung einer SIP-Verbindung benötigte Informationen von einem Applikationsserver über eine Call-Control-Schnittstelle empfangen werden,
b) von dem Applikationsserver mit Hilfe der genannten Informationen die Verbindungsgebühren ermittelt werden, und
c) von dem Applikationsserver die Zustellung der ermittelten Verbindungsgebühren über einen verbindungsunabhängigen SIP-Signalisierungskanal an mindestens einen SIP-Endpunkt veranlaßt wird.

2. Verfahren nach Anspruch 1,
**dadurch gekennzeichnet, dass**
die Gebühreninformation von dem Applikationsserver zum Zweck der Zustellung in eine standardisierte SIP-Nachricht gepackt wird.

3. Verfahren nach Anspruch 1 oder 2,
**dadurch gekennzeichnet, dass**
die Zustellung der genannten standardisierten SIP-Nachricht an einen SIP-Endpunkt über einen Registrar-Server des SIP-Netzes durchgeführt wird, wobei hierbei die Teinehmerregistrierungsfunktion des Registrar-Servers benutzt wird.

4. Verfahren nach einem der Ansprüche 1 bis 3,
**dadurch gekennzeichnet, dass**
für die Sicherung der genannten standardisierten SIP-Nachricht die für die Signalisierungsbeziehung zwischen einem Teilnehmer der SIP-Verbindung (SIP-A) und einem Registrar-Server eingeführten Prozeduren zur Authentisierung des SIP-Senders und/oder zur Sicherung der übertragenen Daten verwendet werden.

5. Applikations-Server eines SIP-Netzes, der
a) der bezüglich einer Verbindung die für die Gebührenberechung der SIP-Verbindung benötigten Daten über eine Call-Control-Schnittstelle empfängt,
b) die Gebühren der SIP-Verbindung ermittelt,
c) die ermittelten Gebühren über einen von der SIP-Verbindung unabhängigen Signalisierungskanal an mindestens einen SIP-Endpunkt übermittelt.
